Europäisches Patentamt

European Patent Office

Office européen des brevets

(11) Veröffentlichungsnummer: **0 397 645**

**A1**

## (12) EUROPÄISCHE PATENTANMELDUNG

(21) Anmeldenummer: 90890143.2

(22) Anmeldetag: 11.05.90

(51) Int. Cl.5: **B01D 53/00, B01J 4/00**

(30) Priorität: 11.05.89 AT 1132/89

(43) Veröffentlichungstag der Anmeldung:
14.11.90 Patentblatt 90/46

(84) Benannte Vertragsstaaten:
**BE DE DK NL**

(71) Anmelder: **VOEST-ALPINE STAHL LINZ**
**Gesellschaft m.b.H.**
**Turmstrasse 45**
**A-4020 Linz(AT)**

(72) Erfinder: **Klinar, Gottfried**
**Alpenstrasse 33**
**A-8700 Leoben(AT)**

Erfinder: **Weissensteiner, Erich**

**A-8712 Niklasdorf 119(AT)**
Erfinder: **Puschenjak, Erwin**
**Bahnhofstrasse 1**
**A-8714 Kraubath(AT)**
Erfinder: **Zuder, Gerald, Dipl.-Ing., Dr. techn.**
**Salzlände 13**
**A-8700 Leoben(AT)**

(74) Vertreter: **Haffner, Thomas M., Dr. et al**
**Patentanwaltskanzlei Dipl.-Ing. Adolf**
**Kretschmer Dr. Thomas M. Haffner**
**Schottengasse 3a**
**A-1014 Wien(AT)**

(54) **Vorrichtung zum Einbringen von Gasen in Festbettfilter.**

(57) Bei einer Vorrichtung zum Einbringen von Gasen in Festbettfilter, inbesondere biologische Filter mit einem Verteiler, aus welchem das Gas ausgepreßt und durch das Filtermaterial geleitet wird, wird der Verteiler aus rinnenförmigen Profilen (1) gebildet, auf welche Deckel (3,11) aufgelegt sind. Die Gasdurchtrittsöffnungen sind an den aneinander anliegenden Bereichen des Deckels (3,11) und des rinnenförmigen Profiles (1) ausgebildet.

FIG. 1

### Vorrichtung zum Einbringen von Gasen in Festbettfilter

Die Erfindung bezieht sich auf eine Vorrichtung zum Einbringen von Gasen in Festbettfilter, insbesondere biologische Filter mit einem Verteiler, aus welchem das Gas ausgepreßt und durch das Filtermaterial geleitet wird, wobei der Verteiler aus rinnenförmigen Profilen gebildet ist, auf welche Deckel aufgelegt sind.

Für die Reinigung von Abluft, wie beispielsweise von Rotteabluft, ist es bekannt, sogenannte Biofilter einzusetzen. Bekannte derartige Biofilter bestehen beispielsweise aus biologisch aktivem Material, wobei als Träger zumeist Kompost verwendet wird. Die in einem derartigen Kompost vorhandene Biozönose ist in der Lage organische Substanzen, wie sie in Rotteabluft oder Abluft aus biologischen Kläranlagen enthalten ist, abzubauen und beim Abbau derartiger organischer Substanzen erfolgt eine Desodorierung und naturgemäß auch eine gewisse Reinigung. Bei höherer Schadstoffkonzentration werden üblicherweise Erdfilter oder andere Festbettfilter eingesetzt, welche allerdings zur Aufrechterhaltung der entsprechenden Luftdurchlässigkeit in regelmäßigen Abständen aufgelockert werden müssen. In allen Fällen ist es zumeist erforderlich das Festbettfilter bzw. das biologische Filter mit Erdbaumaschinen zu befahren und es ist aus diesem Grunde erforderlich den Verteiler für das Einbringen der Gase in das Festbettfilter entsprechend belastbar und insbesondere selbst befahrbar auszubilden.

An einen Verteiler für das Einbringen von Gasen in Festbettfilter bzw. biologische Filter wird aber neben der erforderlichen Druckbeständigkeit und Belastbarkeit auch in erster Linie die Forderung gestellt, die einzubringenden Gase gleichmäßig über die wirksame Fläche des Festbettfilters zu verteilen. Druckfeste und befahrbare Verteiler für derartige Festbettfilter sind beispielsweise in Form von Fertigteilplatten bekannt geworden, welche eine Noppenstruktur an ihrer Unterseite und Luft- bzw. Gasdurchtrittsschlitze an ihrer dem Festbettfilter zugewandten Oberseite aufweisen. Die Schlitze erstrecken sich hiebei im wesentlich vertikal durch die Oberfläche der Verteilerplatte und münden in von den Noppen begrenzte Kanäle. Eine derartige Plattenstruktur erfordert eine entsprechende Unterkonstruktion, da gleichzeitig sichergestellt werden muß, daß der Untergrund zuverlässig gegen Sickerwasser abgedichtet wird. Bei derartigen Platten muß daher am Umfang der jeweiligen Platten eine weitgehend vollständige Dichtung angeordnet werden, wodurch der Aufbau erschwert wird. Weiters führen die im wesentlichen vertikal orientierten Schlitze an der befahrbaren Oberfläche des Verteilers zur Gefahr einer Ausbildung von Gaskanälen im Festbett, so daß die zur Verfügung stehende Fläche nicht vollständig ausgenützt werden kann. Schließlich kann in derartige im wesentlichen vertikale Schlitze Material aus dem Festbettfilter unter der Einwirkung der Schwerkraft leicht eindringen, so daß eine Verstopfung von Schlitzen auftreten kann.

Aus dem Aufsatz "Biofilter in der Abluftreinigung Biomassen-Planung-Kosten-Einsatzmöglichkeiten", BKW VDI-Verlag März 1989 sowie den Seiten 485 bis 493 der Zeitschrift "Korrespondenz Abwasser, Informationsblatt für das Abwasserwesen Wasser, Abwasser, Abfall", 34. Jahrgang, Mai 1987, ist ein Konstruktionsprinzip für eine Biofilteranlage bekanntgeworden. Diese Biofilteranlage besteht aus einem U-förmigen Luftverteilkanal, auf welchen Kanalabdeckplatten aufgelegt sind, durch welche rohrförmige Luftzuführungskanäle zu den mosaikartig zusammengesetzten Filterplatten geführt werden. Die Filterplatten bestehen hiebei aus konstruktiv aufwendigen Einzelsegmenten, welche einen zentralen Luftzuführungskanal besitzen, welcher mit den Kanälen der Abdeckplatten der U-förmigen Luftverteilerkanäle im Zusammenhang steht, sowie zur Verteilung des Gasstromes sich vertikal nach oben erstreckende und sich nach oben verjüngende Luftdurchtrittsschlitze aufweisen.

Das als Festbettfilter eingesetzte Material, wie beispielsweise Kompost im Falle eines Biofilters oder Erde im Falle eines Erdfilters, muß in regelmäßigen Abständen getauscht werden, wobei ein derartiger Austausch von Erde immer dann erfolgen muß, wenn sich bereits Kanäle im Festbettfilter ausgebildet haben, welche eine Reinigung bzw. Desodorierung der Abluft bzw. der zu reinigenden Gase verhindern.

Zur sicheren Verhinderung einer Überfeuchtung von Biofiltern ist bereits vorgeschlagen worden doppelwandige Rohre zu verwenden, wobei aus dem Ringraum zwischen den beiden Rohren Kondenswasser abgezogen werden kann. Derartige doppelwandige Rohrkonstruktionen sind aber bei Bearbeitung des Festbettes überaus gefährdet und nicht ohne gesonderte Schutzmaßnahmen befahrbar.

Im Fall von Biofiltern wird in der Regel ein mit Nutzpflanzen oder Zierpflanzen bepflanztes Substrat eingesetzt, wodurch zum einen die Ausnützung der Restwärme der Abgase und zum anderen eine gewisse Beschleunigung des Wachstums von verschiedenen Nutz- oder Zierpflanzen erzielt werden kann. Die Verwendung von Nutz- oder Zierpflanzen führt aber darüber hinaus zu einer Verbesserung der Luftdurchlässigkeit des Filtersubstrates und begünstigt auf Grund von bikrobiellen Symbionten der Pflanzenwurzel, insbesondere Bakterien und Mykorrhyza durch die Verfügbarkeit von leicht abbaubaren Kohlenstoffverbindungen und anderen Nährstoffen aus den Abgasen eine Stimulation des Pflanzenwachstums, wobei derartige Wurzelsymbionten die Umsetzung von Schadstoffen, welche üblicherweise die Biozönose eines Biofilters beeinträchtigen könnten ermöglichen.

Die Erfindung zielt nun darauf ab, eine Vorrichtung der eingangs genannten Art zu schaffen, welche einen besonders stabilen und befahrbaren Aufbau bei einfachem Zusammenbau ergibt und bei welcher der Aufwand für die Abdichtung gegen Sickerwasser wesentlich herabgesetzt werden kann. Gleichzeitig soll mit der erfindungsgemäßen Ausgestaltung ein Baukastensystem geschaffen werden, mit welchem unterschiedliche Grundrißformen eines Festbettfilters mit einer geringen Anzahl von untereinander verschiedenen Bauteilen hergestellt werden können. Zur Lösung dieser Aufgabe besteht die erfindungsgemäße Vorrichtung der eingangs genannten Art im wesentlichen darin, daß die Gasdurchtrittsöffnungen an den aneinander anliegenden Bereichen des Deckels und des rinnenförmigen Profiles ausgebildet sind. Dadurch, daß die Gasdurchtrittsöffnungen an den aneinander anliegenden Bereichen des Deckels und des rinnenförmigen Profiles ausgebildet sind, können Austrittsrichtungen des zu reinigenden Gases vorgegeben werden, welche eine weit geringere Gefahr einer Verstopfung und eine geringere Gefahr einer Ausbildung von wirkungslosen Kanälen im Festbettfilter mit sich bringen. Da rinnenförmige Profile vorgesehen sind, wird eine sichere Aufnahme von Kondenswasser gewährleistet und bei entsprechend geneigter Verlegung der rinnenförmigen Profile im Grund kann an vorgegebenen Stellen des Verteilers ein einfaches Ausbringen derartigen Kondenswassers erfolgen. Dadurch, daß auf derartige rinnenförmige Profile Deckel aufgelegt werden, wird eine zusammenhängende befahrbare Oberfläche geschaffen.

Mit Vorteil ist die Ausbildung hiebei so getroffen, daß die Gasdurchtrittsöffnungen zur Vertikalen geneigt und im wesentlichen horizontal oder in spitzem Winkel zur Horizontalebene orientiert sind, wodurch die zur Verfügung stehende Fläche des Festbettfilters besser ausgenützt werden kann und auch geringere Mengen an Filtersubstrat eingesetzt und bewegt werden müssen. Die Verteilung des eingebrachten Gases erfolgt auf Grund des unter spitzem Winkel zur Horizontalebene vorgesehenen Austrittes in Richtung der Fläche, was einer Ausbildung von vertikalen Kanälen im Festbettfilter entgegenwirkt und es wird zur Reinigung ein größerer Bereich der Fläche des Festbettfilters herangezogen, als dies bei einem vertikalen Ausbringen des Gases möglich wäre.

In konstruktiv besonders einfacher Weise ist die Ausbildung hiebei so getroffen, daß die Gasdurchtrittsöffnungen von Nuten oder Rillen des Deckels begrenzt sind. Derartige Rillen oder Nuten des Deckels können entsprechend orientiert werden, um eine besonders wirksame Ausnutzung der Biofilterfläche zu gewährleisten. Die jeweils erforderliche Größe der Kanäle kann dadurch sichergestellt werden, daß beispielsweise auch die mit dem Deckel zusammenwirkenden Gegenflächen der rinnenförmigen Profile Nuten oder Rillen aufweisen.

Zur Vereinfachung des Zusammenbaues und zur Erzielung einer besonders stabilen Konstruktion, welche auch mit schwersten Fahrzeugen befahrbar ist, ist die Ausbildung mit Vorteil so getroffen, daß der Deckel in das rinnenförmige Profil eintauchende Wände aufweist und die oberen Stirnseiten der Längsseitenwände des rinnenförmigen Profiles übergreift. Mit derartigen Elementen gelingt ein rascher Zusammenbau und es wird eine im wesentlichen ebene befahrbare Oberfläche ausgebildet, auf welcher das Filtersubstrat in einfacher Weise mit landwirtschaftlich oder Erdbearbeitungsmaschinen verteilt werden kann.

Eine besonders stabile Konstruktion bei gleichzeitig verringerter Neigung zur Verstopfung der Gasdurchtrittsöffnung kann dadurch erzielt werden, daß die Längsseitenwände des rinnenförmigen Profiles an ihren Innenseiten im wesentlichen vertikal verlaufende Rillen oder Nuten aufweisen, welche mit Rillen oder Nuten im aufliegenden Bereich des Deckels in offener Verbindung stehen.

Prinzipiell kann der Aufbau eines derartigen befahrbaren Verteilers für die zu reinigenden Gase aus einer Reihe von Einzelprofilen erfolgen, wobei beispielsweise nebeneinander liegende rinnenförmige Profile gesondert voneinander verlegt werden können. Um in diesen Fällen die Befahrbarkeit zu verbessern, kann bei der Verlegung so vorgegangen werden, daß zwischen benachbarten rinnenförmigen Profilen Deckel und/oder Verbindungselemente zur Ausbildung einer ebenen und befahrbaren Oberfläche des Verteilers angeordnet sind.

Umgekehrt ist es aber ohne weiteres möglich, rinnenförmige Profile zu verwenden, welche selbst bereits eine Mehrzahl von in Längsrichtung parallel zueinander verlaufenden Kanälen aufweisen. In diesen Fällen ist die Ausbildung mit Vorteil so getroffen, daß das rinnenförmige Profil eine Mehrzahl von zueinander parallel verlaufenden Kanälen aufweist und daß quer zur Längsrichtung der Kanäle benachbarte Deckel auf gemeinsamen im wesentlichen vertikalen Trennwänden aufliegen, wobei für die Vereinfachung des Zusammenbaues und insbesondere das sichere und gegen Querkräfte besser verankerte Verlegen der Deckel zu ermöglichen, ist die Ausbildung mit Vorteil so getroffen, daß die Seitenwände bzw. Trennwände des rinnenförmigen Profiles im Bereich der Auflage des bzw. der Deckel(s) Schrägflächen aufweisen, welche mit zu diesen Schrägflächen im wesentlichen parallelen Schrägflächen des bzw. der Deckel(s) zusammenwirken, wobei die Gasdurchtrittsöffnungen zwischen den miteinander zusammenwirkenden Schrägflächen angeordnet sind.

Zur Abdichtung der rinnenförmigen Profile gegen Austritt von Kondenswasser und zum Abschluß ebenso wie zur Verlängerung der eingesetzten Profile, können besonders einfache Bauteile Verwendung finden, welche mit überaus geringem Abdichtungsaufwand verlegt werden können. Die Ausbildung kann hiebei in einfacher Weise so getroffen werden, daß die rinnenförmigen Profile nahe ihren offenen Stirnseiten in Umfangsrichtung verlaufende Rillen oder Rippen aufweisen, in welche Rippen oder Rillen eines Abschlußteiles quer zur Längsachse des rinnenförmigen Profiles einschiebbar sind, wobei zur Verlängerung der rinnenförmigen Profile in Achsrichtung der in Längsrichtung verlaufenden Kanäle dieser Profile der Abschlußteil als Verbindungselement ausgebildet und mit zwei in Längsrichtung fluchtenden rinnenförmigen Profilen verbindbar sein kann, wobei im Abschlußteil ein die rinnenförmigen Profile verbindender Kanal angeordnet ist.

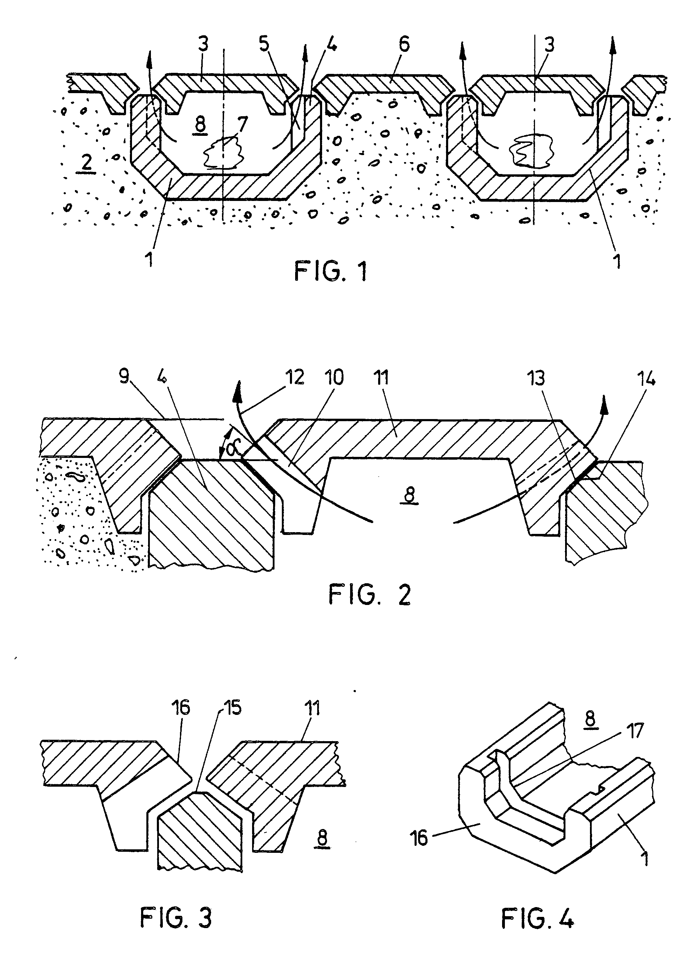

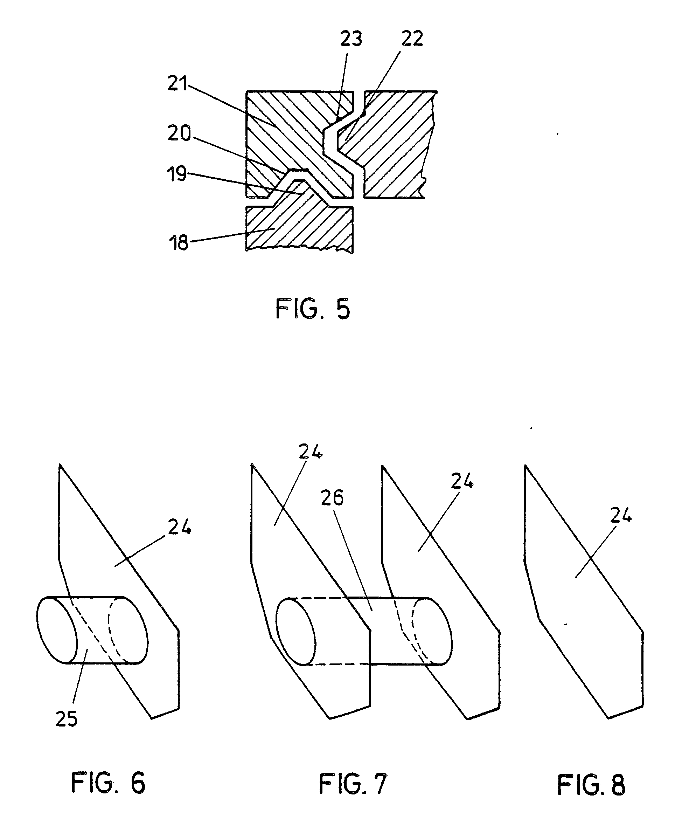

Die Erfindung wird nachfolgend an Hand von in der Zeichnung schematisch dargestellten Ausführungsbeispielen näher erläutert. In dieser zeigen Fig.1 einen Querschnitt durch eine erfindungsgemäße Vorrichtung mit einer Mehrzahl von rinnenförmigen Profilen; Fig.2 eine abgewandelte Ausbildung im Bereich der Deckelauflage in vergrößerter Darstellung; Fig.3 eine vergrößerte Darstellung der Deckelauflage bei rinnenförmigen Profilen, welche eine Mehrzahl von zueinander parallelen Kanälen aufweisen; Fig.4 einen Endbereich eines rinnenförmigen Profiles in perspektivischer Darstellung; Fig.5 ein Eckprofil für den Abschluß der erfindungsgemäßen Vorrichtung an den Längsseiten der rinnenförmigen Profile mit einer weiteren abgewandelten Ausbildung der Seitenwände der rinnenförmigen Profile; Fig.6, 7 und 8 schematische perspektivische Darstellungen von Abschlußelementen für den Einsatz im Zusammenhang mit einer Ausbildung nach Fig.4, wobei Fig.6 und Fig.7 über entsprechende Kanäle für die Verbindung derartiger Profile bzw. für den Anschluß der Leitung für das zu reinigende Gas zeigen und Fig.8 eine einfache Abschlußplatte für die Aufnahme im Endbereich eines rinnenförmigen Profiles entsprechend der Fig.4 darstellt.

In Fig.1 ist ein rinnenförmiges Profil 1 in den Untergrund 2 eingebettet dargestellt. Das rinnenförmige Profil 1 wird in Richtung zum Festbett von einem Deckel 3 abgedeckt, wobei die Ausbildung des rinnenförmigen Profiles 1 so getroffen ist, daß an den Seitenwänden 4 in wesentlich vertikale Rillen bzw. Nuten 5 angeordnet sind, welche in einen Bereich münden, welcher vom Deckel 3 nicht abgedeckt ist. Zur Verbindung zweier solcher rinnenförmiger Profile 1 in der Ebene ist ein Abdeckprofil 6 vorgesehen, welches im wesentlichen dem Profil des Deckels 3 entspricht und die Befahrbarkeit über die Fläche ohne Gefahr einer Veränderung der Orientierung der rinnenförmigen Profile 1 im Grund 2 ermöglicht.

Das rinnenförmige Profil 1 ist dabei mit Vorzug in Richtung seiner Längsachse 7 so orientiert, daß es an einer seiner freien Stirnflächen tiefer liegt als an der anderen, so daß an der tieferliegenden Stirnfläche Kondenswasser abgezogen werden kann. Im Inneren eines derartigen rinnenförmigen Profiles 1 kann aber auch ohne weiteres ein Doppelmantelrohr mit Schlitzen angeordnet sein, welches durch das rinnenförmige Profil und die Deckel 3 gegen mechanische Beschädigung geschützt ist, wobei im Falle eines solchen geschlitzten Doppelmantelrohres im Inneren des rinnenförmigen Profiles 1 das Kondenswasser aus dem Ringraum zwischen den beiden Mantelflächen des Rohres abgezogen werden kann. Der in Längsrichtung bzw. in Richtung der Achse 7 durchgehende Kanal ist mit 8 bezeichnet.

Bei der Darstellung nach Fig.2 wird eine Ausströmrichtung des Gases aus dem Kanal 8 unter spitzem Winkel zur Horizontalebene 9 sichergestellt, wobei der Winkel der Ausströmrichtung mit α angedeutet ist. Das aus dem Kanal 8 über Nuten bzw. Rillen 10 des Deckels 11 ausgepreßte Gas tritt aus diesen von den Nuten bzw. Rillen 10 begrenzten Kanälen in Richtung des Pfeiles 12 aus und wird dadurch gleichmäßig in das darüberliegende Festbett verteilt. Bei der Ausbildung des Deckels 11 ist die Richtung der Gasaustrittsöffnungen durch die entsprechende Abschrägung der an den Seitenwänden 4 der rinnenförmigen Profile anliegenden Flächen 13 des Deckels 11 gegeben und diese Neigung der aufliegenden Flächen 13 entspricht im wesentlichen der Neigung der entsprechenden Gegenflächen 14 der Seitenwände 4 der rinnenförmigen Profile. Wie aus der Darstellung nach Fig.2 ersichtlich ist, können die seitlichen Austrittsöffnungen, wie sie von den Nuten bzw. Rillen 10 des Deckels definiert sind, zu beiden Seiten des Deckels 11 in Längsrichtung versetzt angeordnet sein, was insbesondere dann von besonderem Vorteil ist, wenn, wie in Fig.3 dargestellt, ein rinnenförmiges Profil Verwendung findet, welches aus einer Mehrzahl von nebeneinanderliegenden Kanälen 8 besteht, welche von einer Trennwand 15 anstelle der Seitenwand 4 unterteilt sind. Die seitliche Versetzung der Austrittsöffnungen, welche von den durch die Rillen bzw. Nuten 10 begrenzten Kanälen gebildet werden, hat hiebei insbesondere den Vorteil, daß lokale Überfeuchtungen vermieden werden und das auch in Längsrichtung des Kanales 8 ein gleichmäßiges Einleiten der Gase in das darüberliegende Festbettfilter erfolgt.

Bei der Darstellung nach Fig.4 ist ein Endbereich eines rinnenförmigen Profiles 1 dargestellt, wobei am Innenumfang im Bereich der Stirnseite 16 eine Umfangsnut 17 vorgesehen ist, in welche Abschlußteile eingesteckt werden können, wodurch unmittelbar in einfacher Weise ein dichter Abschluß erzielt wird. Die Abschlußteile werden nachfolgend noch an Hand der Fig.6, 7 und 8 näher beschrieben.

Eine seitliche Abdichtung längs der Seitenwände 4 der rinnenförmigen Profile läßt sich der Darstellung gemäß Fig.5 entnehmen. Die Seitenwand 18 des rinnenförmigen Profiles gemäß Fig.5 unterscheidet sich hiebei von der Ausgestaltung der Seitenwand 4 bzw. der Trennwand 15 durch einen in Längsrichtung verlaufenden Steg 19, welcher mit einer entsprechenden Nut 20 des Eckprofiles 21 formschlüssig zusammenwirkt. Analog läßt sich über Vorsprünge 22 und Nuten 23 eine formschlüssige Verankerung von Abschlußteilen oder Deckelteilen in der Ebene 9 erzielen.

In Fig.6 ist ein wandförmiges Abschlußelement 24 dargestellt, welches einen Anschlußstutzen 25 für den Anschluß des zu reinigenden Gases aufweist. Ein derartiges wandförmiges Abschlußelement 24 kann in die Umfangsnut 17 des stirnseitigen Endbereiches des rinnenförmigen Profiles 1 gemäß Fig.4 eingeschoben werden. Anstelle einer derartigen Anschlußplatte kann aber auch eine Verbindungsplatte als Abschlußelement des rinnenförmigen Profiles 1 eingesetzt werden, wie es in Fig.7 dargestellt ist. Mit dem als Verbindungsplatten ausgebildetem Abschlußelement gemäß Fig.7 wird über einen in Achsrichtung offenen Kanal 26 eine Verbindung der Kanäle 8 von in Achsrichtung aneinander angeschlossenen rinnenförmigen Profilen gewährleistet, wobei die Abdichtung wiederum durch plattenförmige Teile 24, welche in Umfangsnuten 17 im Endbereich der rinnenförmigen Profile eingelegt sind, erzielt wird. Eine einfache Abschlußplatte ohne die Möglichkeit einer Verbindung zu benachbarten rinnenförmigen Profilen und ohne die Möglichkeit eines Anschlusses einer Gasleitung, ist in Fig.8 dargestellt und wiederum mit 24 bezeichnet.

## Ansprüche

1. Vorrichtung zum Einbringen von Gasen in Festbettfilter, inbesondere biologische Filter mit einem Verteiler, aus welchem das Gas ausgepreßt und durch das Filtermaterial geleitet wird, wobei der Verteiler aus rinnenförmigen Profilen (1) gebildet ist, auf welche Deckel (3,11) aufgelegt sind, dadurch gekennzeichnet, daß die Gasdurchtrittsöffnungen an den aneinander anliegenden Bereichen des Deckels (3,11) und des rinnenförmigen Profiles (1) ausgebildet sind.

2. Vorrichtung nach Anspruch 1, dadurch gekennzeichnet, daß die Gasdurchtrittsöffnungen zur Vertikalen geneigt und im wesentlichen horizontal oder in spitzem Winkel zur Horizontalebene (9) orientiert sind.

3. Vorrichtung nach Anspruch 1 oder 2, dadurch gekennzeichnet, daß die Gasdurchtrittsöffnungen von Nuten oder Rillen (5) des Deckels (3,11) begrenzt sind.

4. Vorrichtung nach Anspruch 1, 2 oder 3, dadurch gekennzeichnet, daß der Deckel (3,11) in das rinnenförmige Profil (1) eintauchende Wände aufweist und die oberen Stirnseiten der Längsseitenwände des rinnenförmigen Profiles (1) übergreift.

5. Vorrichtung nach einem der Ansprüche 1 bis 4, dadurch gekennzeichnet, daß die Längsseitenwände (4,15) des rinnenförmigen Profiles (1) an ihren Innenseiten im wesentlichen vertikal verlaufende Rillen oder Nuten (5) aufweisen, welche mit Rillen oder Nuten (10) im aufliegenden Bereich des Deckels (3,11) in offener Verbindung stehen.

6. Vorrichtung nach einem der Ansprüche 1 bis 5, dadurch gekennzeichnet, daß das rinnenförmige Profil (1) eine Mehrzahl von zueinander parallel verlaufenden Kanälen (8) aufweist und daß quer zur Längsrichtung der Kanäle (8) benachbarte Deckel (3,11) auf gemeinsamen im wesentlichen vertikalen Trennwänden (4,15) aufliegen.

7. Vorrichtung nach einem der Ansprüche 1 bis 6, dadurch gekennzeichnet, daß die Seitenwände bzw. Trennwände (4,15) des rinnenförmigen Profiles (1) im Bereich der Auflage des bzw. der Deckel(s) (3,11) Schrägflächen (14) aufweisen, welche mit zu diesen Schrägflächen (14) im wesentlichen parallelen Schrägflächen (13) des bzw. der Deckel(s) (3,11) zusammenwirken, wobei die Gasdurchtrittsöffnungen zwischen den miteinander zusammenwirkenden Schrägflächen (13,14) angeordnet sind.

8. Vorrichtung nach einem der Ansprüche 1 bis 7, dadurch gekennzeichnet, daß zwischen benachbarten rinnenförmigen Profilen (1) Deckel (3,11) und/oder Verbindungselemente zur Ausbildung einer ebenen und befahrbaren Oberfläche des Verteilers angeordnet sind.

9. Vorrichtung nach einem der Ansprüche 1 bis 8, dadurch gekennzeichnet, daß die rinnenförmigen Profile (1) nahe ihren offenen Stirnseiten in Umfangsrichtung verlaufende Rillen oder Rippen (17) aufweisen, in welche Rippen oder Rillen eines Abschlußteiles (24) quer zur Längsachse des rinnenförmigen Profiles (1) einschiebbar sind.

10. Vorrichtung nach einem der Ansprüche 1 bis 9, dadurch gekennzeichnet, daß der Abschlußteil (24) als Verbindungselement ausgebildet ist und mit zwei in Längsrichtung fluchtenden rinnenförmigen Profilen (1) verbindbar ist, wobei im Abschlußteil (24) ein die rinnenförmigen Profile (1) verbindender Kanal (26) angeordnet ist.

FIG. 1

FIG. 2

FIG. 3

FIG. 4

FIG. 5

FIG. 6

FIG. 7

FIG. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 634 377  (H. GETHKE) <br> * Figuren 6-8 * <br> --- | 1-10 | B 01 D  53/00 <br> B 01 J  4/00 |
| A | DE-A-3 727 269  (H. GETHKE) <br> * Figuren 1-2 * <br> ----- | 1-10 | |

**RECHERCHIERTE SACHGEBIETE (Int. Cl.5)**

B 01 D
B 01 J

Der vorliegende Recherchenbericht wurde für alle Patentansprüche erstellt

| Recherchenort | Abschlußdatum der Recherche | Prüfer |
|---|---|---|
| DEN HAAG | 26-07-1990 | KANOLDT W.W. |